## Europäisches Patentamt
## European Patent Office
## Office européen des brevets

(11) Veröffentlichungsnummer: **0 240 572**
**A1**

(12) ## EUROPÄISCHE PATENTANMELDUNG
Veröffentlicht nach Art. 158 Abs. 3 EPÜ

(21) Anmeldenummer: 86905428.8

(22) Anmeldetag: 16.09.86

Daten der zugrundeliegenden internationalen Anmeldung:

(86) Internationale Anmeldenummer:
PCT/JP86/00481

(87) Internationale Veröffentlichungsnummer:
WO87/01777 (26.03.87 87/07)

(51) Int. Cl.³: **F 16 F 15/02**
**F 16 F 15/08**

(30) Priorität: 18.09.85 JP 206113/85
28.05.86 JP 121165/86

(43) Veröffentlichungstag der Anmeldung:
14.10.87 Patentblatt 87/42

(84) Benannte Vertragsstaaten:
FR IT

(71) Anmelder: CHUBU DENRYOKU KABUSHIKI KAISHA
1, Toshin-cho Higashi-ku Nagoya-shi
Aichi 461(JP)

(71) Anmelder: ZAIDAN HOJIN DENRYOKU CHUO
KENKYUSHO
6-1, Otemachi 1-chome Chiyoda-ku
Tokyo 100(JP)

(71) Anmelder: KABUSHIKI KAISHA SODEN
2-23, Ojima 1-chome Koto-ku
Tokyo 136(JP)

(72) Erfinder: HAYAKAWA, Masato
Chubu Denryoku Kabushiki Kaisha1, Toshin-cho
Higashi-kuNagoya-shiAichi 461(JP)

(72) Erfinder: NISHIZAWA, Yasuhiko
Chubu Denryoku Kabushiki Kaisha1, Toshin-cho
Higashi-kuNagoya-shiAichi 461(JP)

(72) Erfinder: IRIE, Hiroshi
Chubu Denryoku Kabushiki Kaisha1, Toshin-cho
Higashi-kuNagoya-shiAichi 461(JP)

(72) Erfinder: TOMIOKA, Tatsuhide
Chubu Denryoku Kabushiki Kaisha1, Toshin-cho
Higashi-kuNagoya-shiAichi 461(JP)

(72) Erfinder: SAKAI, Satoshi
Chubu Denryoku Kabushiki Kaisha1, Toshin-cho
Higashi-kuNagoya-shiAichi 461(JP)

(72) Erfinder: SHIOMI, Satoshi
Zaidan Hojin Denryoku Chuo KenkyushoDoboku Ken.
1646, AbikoAbiko-shiChiba 270-11(JP)

(72) Erfinder: MASUKO, Yoshio
Zaidan Hojin Denryoku Chuo Kenkyusho Doboku Ken.
1646, AbikoAbiko-shiChiba 270-11(JP)

(72) Erfinder: MATSUDA, Taiji
Zaidan Hojin Denryoku Chuo Kenkyusho Doboku Ken.
1646, AbikoAbiko-shi-Chiba 270-11(JP)

(72) Erfinder: AOYAGI, Sakae
Zaidan Hojin Denryoku Chuo Kenkyusho Doboku Ken.
1646, AbikoAbiko-shiChiba 270-11(JP)

(72) Erfinder: KAWASAKI, Akira
Kabushiki Kaisha Shoden2-23, Ojima 1-chome
KotokuTokyo 136(JP)

(72) Erfinder: KOMATSU, Kazuyoshi
Kabushiki Kaisha Shoden2-23, Ojima 1-chome
KotokuTokyo 136(JP)

(72) Erfinder: HATANAKA, Taketoshi
Kabushiki Kaisha Shoden2-23, Ojima 1-chome
KotokuTokyo 136(JP)

(74) Vertreter: Seibert, Rudolf, Dipl.-Ing. et al,
Tattenbachstrasse 9
D-8000 München 22(DE)

(54) **ANLAGE ZUR VERHÜTUNG VON ERDBEBEN.**

(57) Die vorliegende Erfindung bezieht sich auf einen Schwingungsisolator zum Schutz von Präzisionsgeräten gegen Schwingungen und Erschütterungen, die durch ein Erdbeben verursacht werden; dabei soll insbesondere sicher gestellt werden, daß Schwingungen nicht auf das Gerät übertragen werden, so daß das Gerät nicht aufhört, normal zu arbeiten, sondern daß es voll in Funktion gehalten werden kann. Für diesen Zweck werden auftretende Lateralschwingungen von einem scheibenförmigen Schwingungsabsorber (5) gedämpft und absorbiert, der aus einem elastischen Material besteht und durch dessen Zentrum sich ein Haltebolzen (3) erstreckt, auf den eine Tragplatte (14) zur Halterung des Gerätes

(21) montiert ist, und wobei der scheibenförmige Schwingungsabsorber (5) eine Vielzahl von Durchbrüchen (11) aufweist, die symmetrisch zu seinem Zentrum und auf konzentrischen Kreisen dazu verlaufen , und mit einem in Lateralrichtung bewegbaren Gleitlager (8,9) versehen ist, während auftretende vertikale Schwingungen durch Gleitlager (16,17), Schraubenfedern (18), Schwingungsdämpfer (19) und einem Höhenlageregler (20) gedämpft und absorbiert werden.

FIG.3

FIG.7(a)

0240572

Schwingungsisolator

Die vorliegende Erfindung bezieht sich auf einen Schwingungsisolator zum perfekten Schutz von Magnetplatteneinheiten und anderen Präzisionsgeräten gegen Schwingungen und Erschütterungen, die bei einem Erdbeben oder ähnlichen Katastrophen auftreten.

Vorrichtung zum Schutz von Geräten vor Schwingungen, die beispielsweise von einem Erdbeben hervorgerufen werden, können im wesentlichen in die beiden folgenden Gruppen unterteilt werden.

Die erste Gruppe von Vorrichtungen zum Schutz vor Schwingungen ist unter dem Gesichtspunkt konstruiert, wie fest und stabil das zu schützende Gerät gebaut ist, d.h. unter dem Gesichtspunkt der Festigkeit, wobei es wesentlich ist, bis zu welchem Grad eines Erdbebens der geschützte Apparat ohne Schaden sicher auf seinem Platz gehalten werden kann. Dabei wird jedoch nicht in Betracht gezogen, wie die Funktion eines solchen Gerätes durch Schwingungen oder Erschütterungen eines Erdbebens beeinflußt wird.

Deshalb kann bei der Verwendung eines solchen Schwingungsschutzes nicht garantiert werden, - falls das Gerät so konstruiert ist, daß seine Funktionen leicht durch Schwingungen beeinträchtigt werden - daß die Funktion dieses Gerätes auf jeden Fall geschützt erhalten bleibt, selbst wenn das Gerät vor Schäden, beispielsweise einem Herunterfallen, geschützt werden kann.

Die zweite Gruppe von Vorrichtungen zum Schutz vor Schwingungen und Erschütterungen ist mit dem Ziel konstruiert, eine Beeinträchtigung der Funktionen des geschützten Gerätes, das selbst dazu neigt, durch Schwingungen leicht beschädigt zu werden, zu verhindern, wobei in diesen Fällen eine Sicherheitsvorrichtung im Funktionszentrum des Gerätes vorgesehen ist, die leicht zu Schäden durch Vibrationen neigt, so daß bei einem starken Erdbeben das Gerät ab einem voreingestellten Schwingungs- oder Erschütterungswert seine Funktion einstellt.

Im Fall der vorstehend beschriebenen Gruppe ist die Sicherheitsvorrichtung für ein geschütztes Gerät entwickelt, das durch Schwingungen, die durch ein Erdbeben verursacht werden beschädigt werden kann und wenn das Gerät gegen Schwingungen geschützt wird, kann nicht garantiert werden, daß es seine Funktion einstellt. Das bedeutet, daß bei Auftreten eines Erdbebens nicht garantiert werden kann, daß unabhängig von der Größe des Erdbebens die Funktion eines solchen Gerätes ohne Störungen erhalten bleibt.

Der vorliegenden Erfindung liegt daher die Aufgabe zu Grunde, einen Schwingungsisolator zu schaffen, der so aufgebaut ist, daß die vorstehend beschriebenen Nachteile herkömmlicher Schutzvorrichtungen gegen Schwingungen beseitigt sind, und daß das geschützte Gerät nicht nur vor äußeren Schäden, beispielsweise durch ein Herunterfallen, geschützt ist, sondern auch daß schädliche Schwingungen oder Erschütterungen durch ein Erdbeben o. dgl. davon abgehalten werden, daß sie auf das geschützte Gerät übertragen werden, so daß - selbst wenn die Funktion des geschützten Gerätes leicht durch derartige Schwingungen Schaden erleiden könnte - dieses Gerät seine Funktion nicht einstellt, sondern vollständig in Betrieb gehalten werden kann.

Zur Lösung dieser Aufgabe ist daher erfindungsgemäß ein
Schwingungsisolator vorgesehen, der aus einer oder mehreren
Isolatoreinheiten besteht, die jede einen zentralen
Befestigungsbolzen sowie einen scheibenförmigen
Schwingungsabsorber aus elastischem Material in Form von
Gummi oder ähnlichem aufweisen, durch dessen Zentrum sich der
Befestigungsbolzen erstreckt, wobei der Schwingungsabsorber
mit einer Vielzahl von runden, ovalen oder polygonalen
Durchbrüchen versehen ist, die symmetrisch zum Zentrum und
auf angenähert konzentrischen Kreisen zu diesem angeordnet
sind, daß unter dem Schwingungsabsorber ein Gleitlager für
Bewegungen bei Schwingungen in horizontalen Richtungen
eingebaut und Befestigungsmittel zur Festlegung des
Schwingungsabsorbers im Inneren eines Aufnahmegehäuses
vorgesehen sind, das das untere Ende des Befestigungsbolzens
und die anderen Teile umschließt, so daß das Gerät gegen
laterale oder horizontale Schwingungen geschützt ist.

Ferner sind gemäß der vorliegenden Erfindung vertikale
Gleitmittel vorgesehen, die eine Kugelführung oder ähnliches
aufweisen, um bei vertikalen Schwingungen eine Bewegung mit
nur sehr geringer Reibung zu ermöglichen, wodurch ein
Blockieren oder ähnliches verhindert wird. Ferner sind
Widerlager zur Aufnahme von Schraubenfedern für die
Absorption vertikaler Schwingungen und gleichzeitig zur
Abstützung des Gewichtes des Gerätes, das auf einer
Tragplatte montiert ist, sowie Schwingungsdämpfer zur
Dämpfung vertikaler Schwingungen auf einen vorgegebenen Wert
und schließlich ein Höhenlageregler vorgesehen, der so
konstruiert ist, daß er sich symmetrisch nach beiden Seiten
bei vertikalen Schwingungen bewegen kann; alle die vorstehend
aufgeführten Bauteile sind zwischen der Tragplatte für das zu
schützende Gerät und einer weiteren Tragkonstruktion
angeordnet, wobei diese weitere Tragkonstruktion auf den
Befestigungsbolzen des Schwingungsisolators - nachstehend als
Isolator horizontaler Schwingungen bezeichnet - befestigt
ist, um das Gerät gegen horizontale Schwingungen zu schützen,
wobei insgesamt das Gerät nicht nur gegen horizontale sondern
auch gegen vertikale Schwingungen geschützt ist.

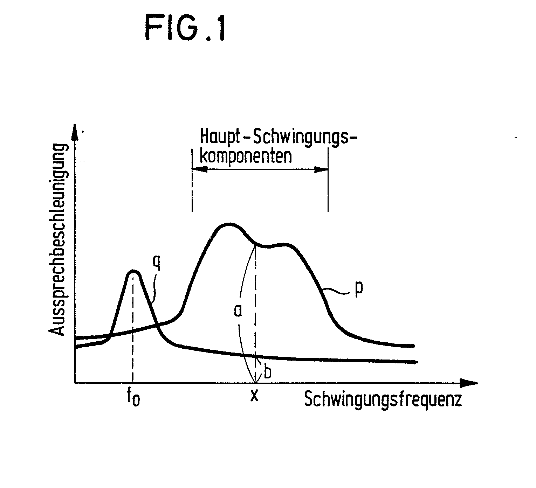

Fig. 1 zeigt exemplarisch charakteristische Kurven über die
Beziehung zwischen Schwingungsfrequenz und der dadurch
erfolgten Beschleunigung, dargestellt an einem bestimmten
freien Schwingungssystem bei Auftreten eines Erdbebens.
Entsprechend Fig. 1 ist die Schwingungsfrequenz auf der
Abszisse und die Beschleunigung auf der Ordinate aufgetragen.
Die Kurve p zeigt den Verlauf der auftretenden Beschleunigung
ohne Verwendung eines Schwingungsisolators nach der
vorliegenden Erfindung, während die Kurve q den Verlauf der
Beschleunigung bei Verwendung des erfindungsgemäßen
Schwingungsisolators zeigt, wobei $f_0$ die entsprechende
Resonanzfrequenz bei der Verwendung dieses
Schwingungsisolators angibt. Bei Auftreten eines Erdbebens
werden die seismische Wellenform, die Beschleunigungsgröße
des Erdbebens sowie die Reaktion des Objektes darauf abhängig
von der Schwingungscharakteristik des Objektes, dessen
Aufstellungsort oder ähnlichem unterschiedlich ausfallen, so
daß in einem solchen Falle die Reaktionskurve nicht stets die
selbe sein wird; die Beziehungen zwischen den beiden
genannten Faktoren können jedoch in ihren grundlegenden
Verhältnissen aus Fig. 1 entnommen werden.

Im Falle, daß das Gerät freie Schwingungen ausführt, kann man
feststellen, daß ohne Verwendung eines Schwingungsisolators
nach der vorliegenden Erfindung durch ein Erdbeben
Schwingungen entsprechend der Kurve p in Fig. 1 auftreten.
Die Schwingungsfrequenzanteile des von einem Erdbeben
angeregten Gerätes erstrecken sich über einen weiten Bereich,
wobei eine grundsätzliche Schwingungskomponente mit einer
hohen Beschleunigung auftritt, die ganz besonders das zu
schützende Gerät beeinflußt und daher besonders
berücksichtigt werden muß.

Deshalb ist als wesentliche Funktion des Schwingungsisolators
sicherzustellen , daß der Resonanzpunkt, d.h.

die Resonanzfrequenz $f_0$ ausreichend niedrig in Bezug auf
Schwingungsfrequenzen des Erdbebens wird, und daß darüber
hinaus dessen Verstärkung im schädlichen Frequenzbereich
einen Wert kleiner als 1 annimmt. Ferner ist es eine absolut
notwendige Bedingung, daß - z.B. bei einer Frequenz x - der
Beschleunigungswert b bei Verwendung eines
Schwingungsisolators gedämpft wird - unabhängig von der Größe
des bei Nichtverwendung des Schwingungsisolators auftretenden
Beschleunigungswertes a im Bereich Frequenz x - und zwar
auf einen Wert, bei dem in keiner Weise die Funktion des
geschützten Gerätes gestört wird. Eine solche Bedingung kann
jedoch mit einem Schwingungsisolator nach der vorliegenden
Erfindung erreicht werden.

Mit einem Isolator horizontaler Schwingungen gemäß der
vorliegenden Erfindung ist sichergestellt, daß bei Auftreten
eines Erdbebens das geschützte Gerät nicht nur vor Schäden,
wie beispielsweise einem seitwärtigen Herabfallen, geschützt
ist, sondern daß auch Schwingungen, die durch den Boden des
Gebäudes übertragen werden, gedämpft und absorbiert werden
können, so daß - selbst wenn das Gerät dazu neigt, besonders
leicht durch Schwingungen beschädigt zu werden - die Funktion
des Gerätes vollständig erhalten bleibt. Wesentlich ist, daß
der Schwingungsisolator eine zylindrische Gestalt und daher
keine laterale Vorzugsrichtung hat, da für jede laterale
Richtung die gleichen Bedingungen vorliegen, so daß
schädliche Schwingunskomponenten aus jeder lateralen Richtung
vollständig gedämpft und absorbiert werden können.

Der Isolator für horizontale Schwingungen kann dabei zum
Schutz von Geräten jeden Gewichtes und jeder Größe durch
Auswahl der entsprechenden Anzahl von Befestigungsbolzen
angewendet werden, d.h., daß die Anzahl der
Schwingungsisolatoreinheiten in Abhängigkeit vom Gewicht und
der Größe bzw. der Grundfläche des zu schützenden Gerätes
auszuwählen ist.

Der Schwingungsisolator der vorliegenden Erfindung ist klein
in den Abmessungen und leicht im Gewicht, so daß er leicht eingebaut werden kann. Darüberhinaus können herkömmliche Vorrichtungen zum Schutz vor Schwingungen leicht durch einen Schwingungsisolator der vorliegenden Erfindung ersetzt werden.

Die bei Verwendung des Horizontal-Schwingungsisolators auftretende Resonanzfrequenz liegt sehr niedrig, wobei der Schwingungsisolator eine sehr weiche Federcharakteristik aufweist, so daß nach Abklingen des Erdbebens die Halterung und das darauf montierte geschützte Gerät wieder ihre ursprüngliche Stellung einnehmen. Im Falle eines herkömmlichen, großflächigen schwingungsisolierenden Bodens ist nach einer Beschleunigung über einen vorgegebenen Wert eine Rückstellung erforderlich, während bei Verwendung eines Schwingungsisolators nach der Erfindung eine solche Rückstellung nicht mehr notwendig ist. Daher kann dieser Schwingungsisolator leicht gehandhabt werden und arbeitet immer fehlerfrei.

Darüberhinaus ist der Horizontal-Schwingungsisolator sehr einfach in seiner Konstruktion und im Falle, daß er bereits an einer Stelle eingebaut ist, kann er sehr leicht an eine andere umgesetzt werden. Darüberhinaus ist keine besondere Pflege oder Wartung für die Dauerfunktionstüchtigkeit des Schwingungsisolators erforderlich, so daß er darüberhinaus noch ökonomisch besonders günstig ist.

Ferner kann nach der vorliegenden Erfindung auch ein Vertikal-Schwingungsisolator mit dem Horizontal-Schwingungsisolator kombiniert werden, wodurch bei Auftreten eines Erdbebens schädliche Komponenten sowohl vertikaler als auch horizontaler Schwingungen, die durch den Fußboden auf das geschützte Gerät übertragen werden, vollständig gedämpft und absorbiert werden können. Somit kann die Funktion des Gerätes sowohl gegen horizontale als auch gegen vertikale Schwingungen geschützt werden. Dabei ist der Vertikal-Schwingungsisolator genauso einfach konstruiert wie der Horizontal-Schwingungsisolator und kann darüberhinaus leicht von einer Montagestelle zur anderen verbracht werden, wobei auch hier kein besonderer Aufwand für die
Funktionstüchtigkeit und Einsatzfähigkeit des Isolators
erforderlich ist.

Anhand einer schematischen Zeichnung sind Aufbau und
Wirkungsweise eines Ausführungsbeispiels nach der Erfindung
näher erläutert. Dabei zeigen:

Fig. 1      ein schematisches Diagramm für die Beziehung
            zwischen der Schwingungsfrequenz und der daraus
            resultierenden Beschleunigung, dargestellt an
            einem freischwingenden System bei Auftreten eines
            Erdbebens;

Fig. 2      die äußere Ansicht einer Ausführungsform eines
            Horizontal-Schwingungsisolators, wobei Fig. 2a
            eine Frontansicht und Fig. 2b eine Draufsicht
            zeigen;

Fig. 3      einen Längsschnitt durch einen
            Schwingungsisolators nach Figur 2, mit der
            inneren Struktur desselben;

Fig. 4      den detaillierten Aufbau eines scheibenförmigen
            Schwingungsabsorbers, wie er im
            Schwingungsisolator nach Fig. 2 verwendet ist,
            wobei Fig. 4a eine Ansicht von oben, Fig. 4b eine
            Ansicht von der Seite und Fig. 4c eine
            Schnittansicht entsprechend der Linie C-C nach
            Fig. 4a zeigen;

Fig. 5      im einzelnen den Aufbau des ringförmigen Gehäuses
            des Schwingungsabsorbers, wobei Fig. 5a eine
            Ansicht von oben, Fig. 5b eine Seitenansicht und
            Fig. 5c einen Schnitt entsprechend der
            Schnittlinie C-C nach Fig. 5a darstellen;

Fig. 6      die Kombination eines scheibenförmigen
            Schwingungsabsorbers und des ringförmigen Gehäuses bei einem Schwingungsisolator nach Fig.
2, wobei Fig. 6a eine Ansicht von oben, Fig. 6b
eine Seitenansicht und Fig. 6c einen Schnitt
entlang der Linie C-C nach Fig. 6a darstellen;

Fig. 7      ein Ausführungsbeispiel nach der vorliegenden
            Erfindung, wobei ein Vertikal-Schwingungsisolator
            mit einem Horizontal-Schwingungsisolator
            kombiniert ist, wobei Fig. 7a eine Seitenansicht
            des wesentlichen Teils und Fig. 7b eine Ansicht
            von oben auf das gleiche Teil zeigen, und

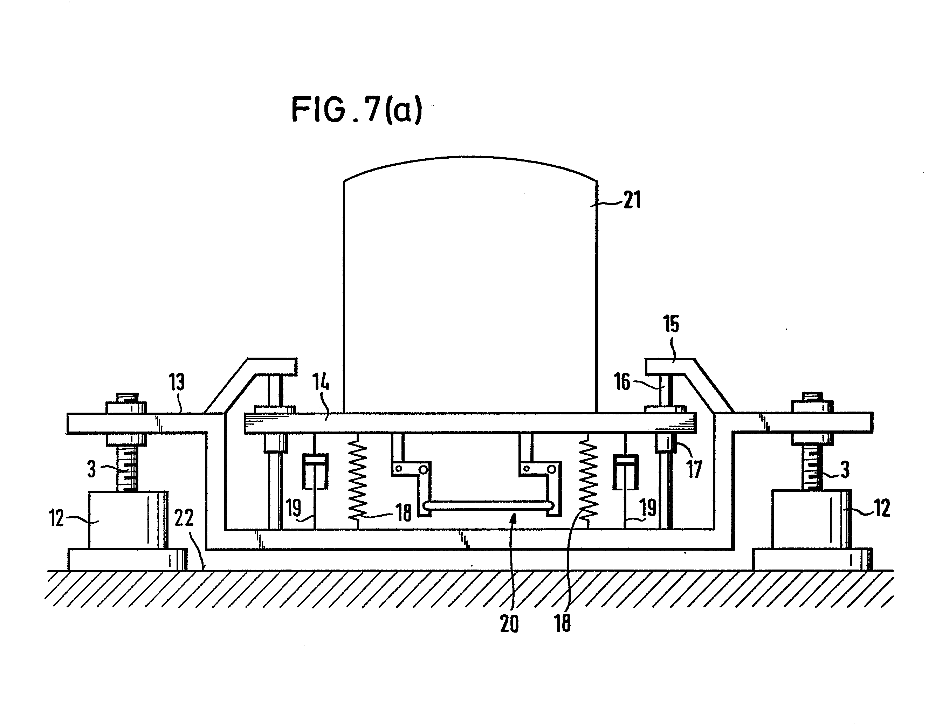

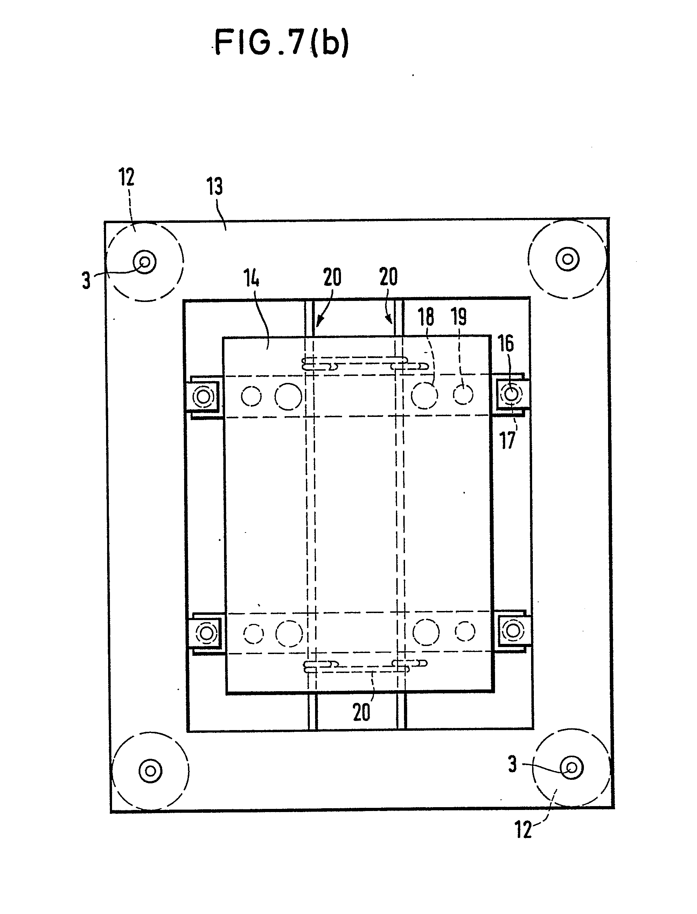

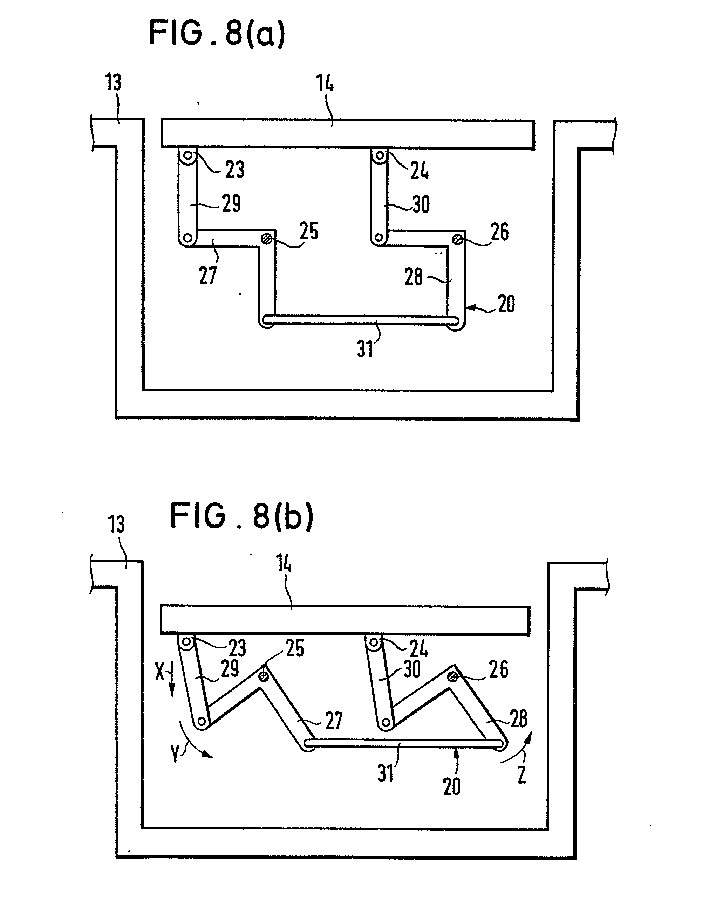

Fig- 8      Aufbau und Funktion des Höhenlagereglers, wie er
            in einem Schwingungsisolator nach Fig. 7
            verwendet ist, wobei Fig. 8a die normale Stellung
            des Höhenlagereglers und Fig. 8b eine Stellung
            bei Auftreten einer Schwingung zeigt.

Zunächst wird ein Ausführungsbeispiel eines Isolators für
Horizontalschwingungen nach der Erfindung beschrieben.

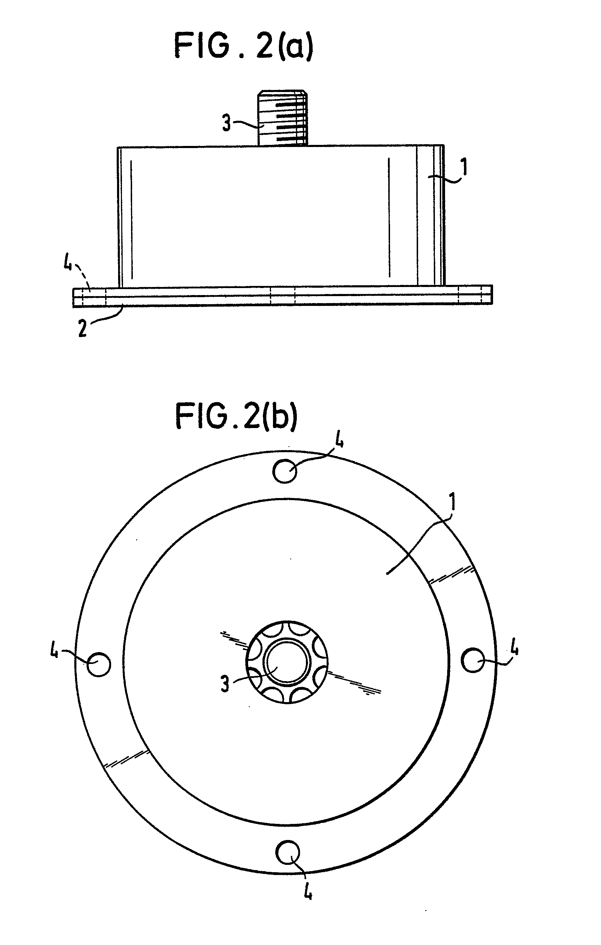

In Fig. 2a und b sind mit 1 ein zylindrisches Gehäuse, mit 2
eine Bodenplatte, mit 3 ein Befestigungsbolzen und mit 4
Bohrungen zur Befestigung des Schwingungsisolators auf dem
Boden bezeichnet. Der wesentliche Teil des
Schwingungsisolators ist in einem Aufnahmegehäuse
untergebracht, das das Gehäuse 1 und die Bodenplatte 2
umfasst, das auf dem Fußboden des Gebäudes mittels durch die
Bohrungen 4 geführter Schrauben oder anderer
Befestigungsmittel befestigt ist. Ein zu schützendes Gerät
ist auf einer nicht näher dargestellten Tragplatte mit einem
Halterahmen angeordnet, wobei die vier Ecken dieser
Halteplatten auf den oberen Teil des Schwinguhgssisolators
über besagte Befestigungsbolzen 3 befestigt sind, so daß
diese Tragplatte an vier Punkten unterstützt ist. Das Gehäuse
1 und die Bodenplatte 2 können aus Metall oder aus einem
Kunststoff hergestellt werden, während der Befestigungsbolzen
3 zweckmäßigerweise aus Metall oder einem Kunstharz gefertigt
sind. Zur Erleichterung der Montage der Tragplatte für die Unterstützung des zu schützenden Gerätes kann der Haltebolzen mit einem Gewinde versehen sein. Selbstverständlich ist ein derartiges Gewinde nicht unbedingt erforderlich, sondern es können auch andere Befestigungsmittel alternativ eingesetzt werden.

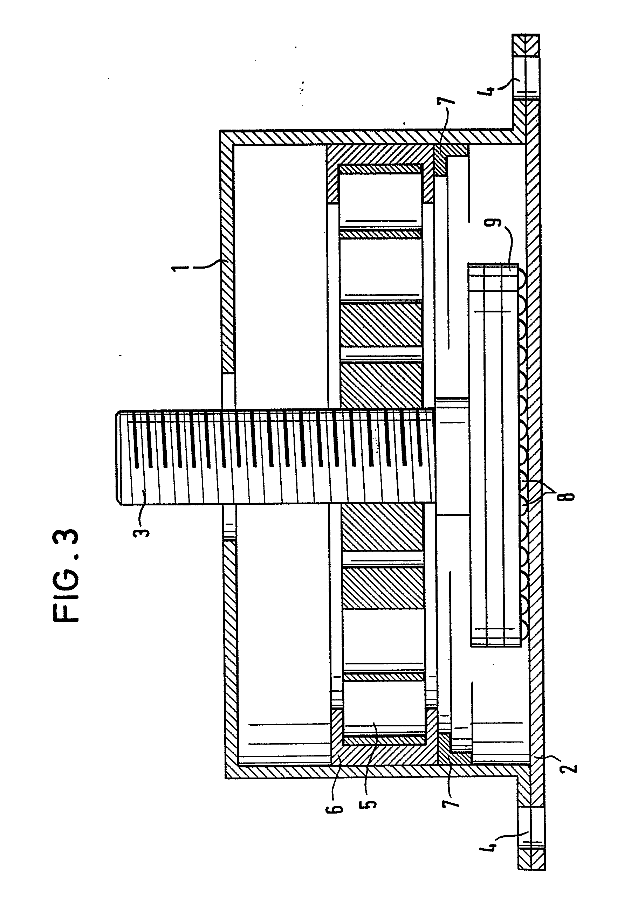

Entsprechend Figur 3 ist das Aufnahmegehäuse dargestellt mit dem Gehäuse 1 und der Bodenplatte 2, dem Befestigungsbolzen 3, einer Schwingungsabsorberscheibe 5, einer ringförmigen Hülse 6 für die Schwingungsabsorberscheibe 5, Befestigungsmittel 7 zur Befestigung der ringförmigen Hülse 6 und ein Gleitlager das Lagerkugeln 8 und eine Aufnahmeplatte 9 für diese Lagerkugeln 8 umfasst.

Die Schwingungsabsorberscheibe 5, die später im einzelnen beschrieben wird, weist im Zentrum den Befestigungsbolzen 3 auf und besteht aus relativ weichem Gummi, wie beispielsweise einem synthetischen Gummi, und hat die Funktion der Absorption und Dämpfung von lateralen Schwingungen. Die ringförmige Hülse 6 ist so ausgebildet, daß sie die Schwingungsabsorberscheibe 5 auf ihrem Umfang umfasst und ist aus Metall hergestellt, um dadurch zu verhindern, daß sich der Umfangsbereich der Schwingungsabsorberscheibe 5 aus relativ weichem Gummi deformiert, und um außerdem die Schwingungsabsorberscheibe 5 sicher auf der Innenseite des Gehäuses 1 über Befestigungsmittel 7 in seiner Lage zu sichern.

Die Platte 9 und die große Anzahl von Lagerkugeln 8, die auf der Unterseite der Platte auf konzentrischen Kreisen angeordnet sind, sind unterhalb der Schwingungsabsorberscheibe 5 angeordnet und bilden damit ein Gleitlager, das bei auftretenden lateralen Schwingungen sich bewegen kann.

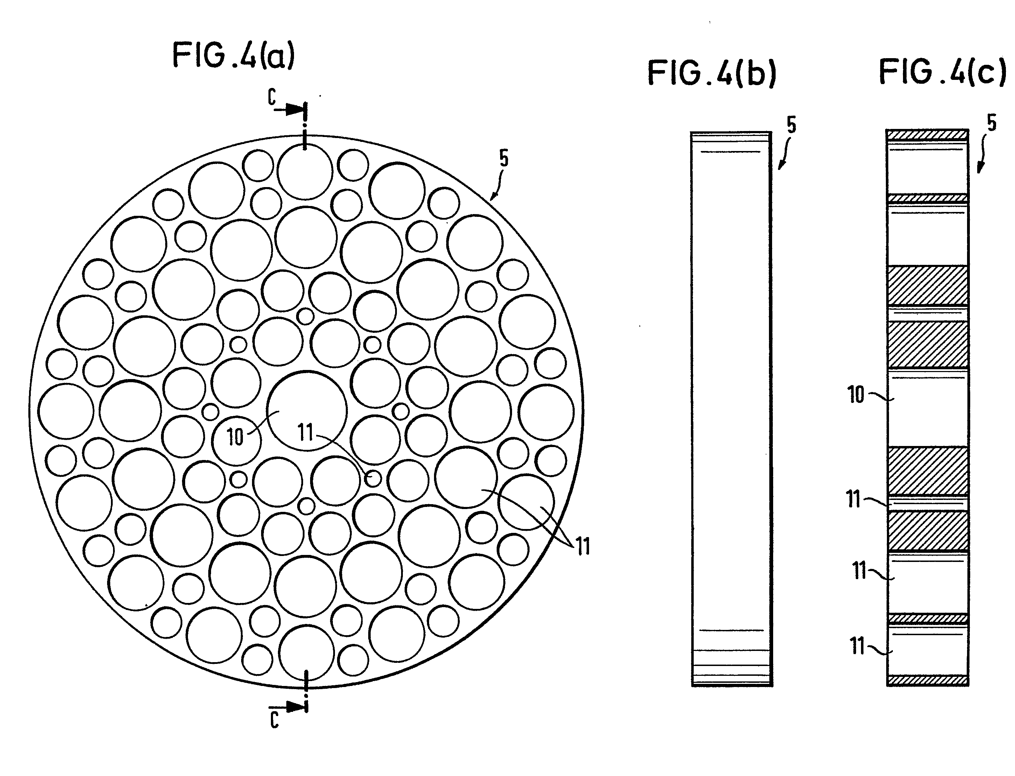

Entsprechend Figur 4 weist die Schwingungsabsorberscheibe 5 aus elastischem Material im Zentrum eine Durchgangsbohrung 10 auf, in die der Befestigungsbolzen 3 ohne Spiel eingesetzt ist. Darüberhinaus sind in der Scheibe 5 eine Vielzahl runder Durchbrüche 11 vorgesehen, die symmetrisch zum Zentrum liegen und auf angenähert konzentrischen Kreisen dazu angeordnet sind. Der Querschnitt dieser Durchbrüche 11 muß nicht unbedingt kreisförmig sein, er kann auch oval oder polygonal ausgebildet werden.

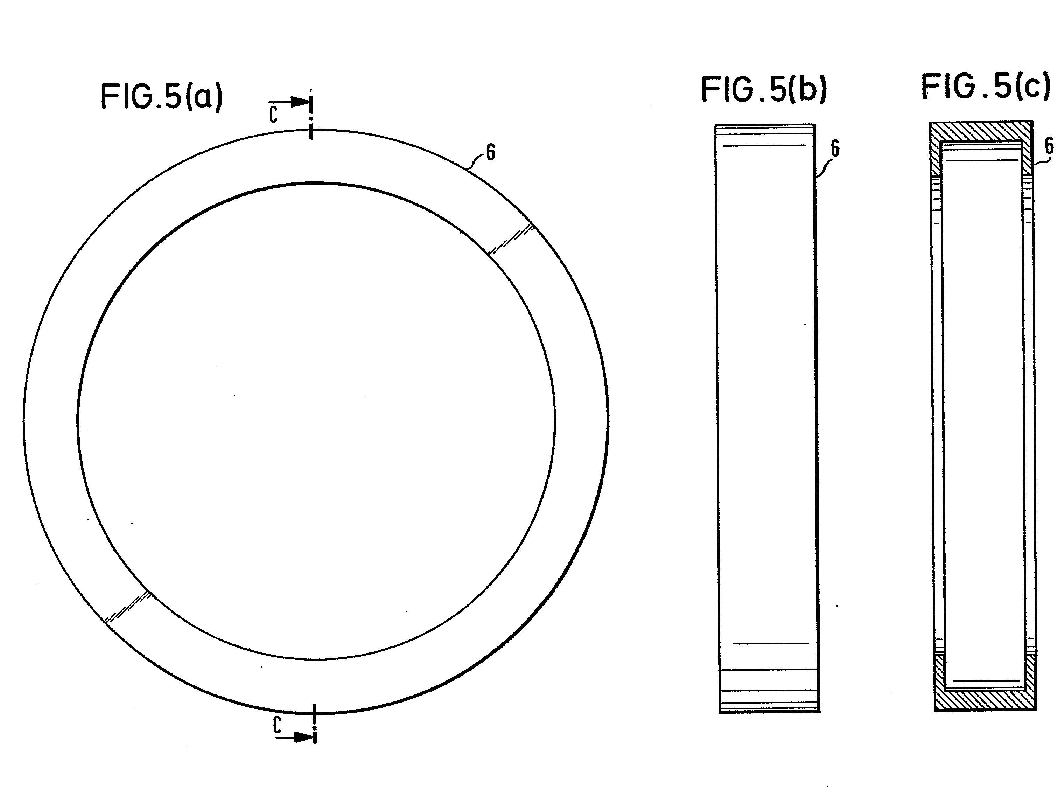

Wie man aus Figur 5 ersieht, besteht die ringförmige Hülse 6 aus einem Ring mit einem Querschnitt entsprechend einem liegenden U, um die Schwingungsabsorberscheibe 5 darin dicht aufzunehmen. Somit sind die äußeren Umfangsbereiche und die Kanten der oberen und unteren Fläche der Schwingungsabsorberscheibe 5 von der ringförmigen Hülse 6 umgeben, so daß damit sichergestellt ist - auch wenn die Schwingungsabsorberscheibe 5 durch Schwingungen deformiert wird - daß diese Scheibe 5 nicht aus der ringförmigen Hülse 6 herausrutschen kann.

Nachstehend wird die Wirkungsweise des Isolators für Horizontalschwingungen beschrieben.

Vorausgesetzt, daß bei einem Erdbeben die Bodenplatte 2 in horizontaler Richtung vibriert, wird der Reibungswiderstand zwischen der Platte 9 zur Aufnahme der Lagerkugeln und der Bodenplatte durch die Lagerkugeln 8 reduziert und zwar unabhängig von der Größe der horizontalen Schwingungen, so daß die Platte 9 und entsprechend der Haltebolzen 3 dazu tendieren, auf ihrer ursprünglichen Stellung stehenzubleiben. Andererseits wird bei einer spontan auftretenden Schwingung oder Erschütterung die Schwingungsabsorberscheibe 5, die aus weichelastischem Material besteht und wie eine Feder wirkt, deformiert, so daß diese spontanen Schwingungen gedämpft und absorbiert werden, wodurch schädliche Lateralstöße oder Schwingungen nicht auf das geschützte Gerät auf dem Befestigungsbolzen 3 übertragen werden.

Als Ergebnis der Anordnung einer Vielzahl von Durchbrüchen auf konzentrischen Kreisen in der Schwingungsabsorberscheibe 5 kann die Resonanzfrequenz $f_0$ daher erheblich bis auf einen Bruchteil der ursprünglichen Frequenz reduziert werden, so daß sich eine Beschleunigungskurve entsprechend der Kurve q
in Figur 1 ergibt.

Nachstehend ist ein Ausführungsbeispiel eines Isolators für
horinzontale und vertikale Schwingungen entsprechend der
vorliegenden Erfindung beschrieben.

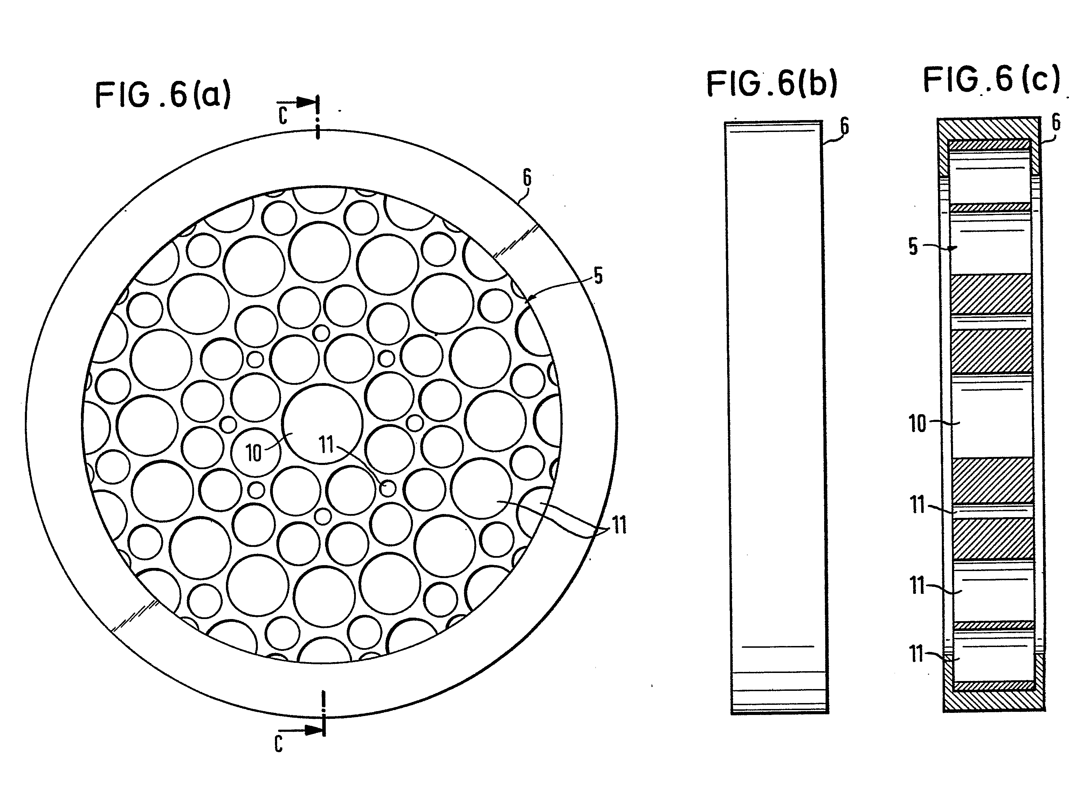

In Figur 7 sind mit den Bezugsziffern 12 die Isolatoren für
horizontale Schwingungen beschrieben, deren Konstruktion
anhand der Figuren 1 bis 6 bereits erläutert ist. Die
Bezugsziffer 13 bezeichnet eine Tragkonstruktion, die auf den
Befestigungsbolzen 3 der Isolatoren 12 für
Horizontalschwingungen festgelegt ist; die Bezugsziffer 14
bezeichnet eine Tragplatte für das zu schützende Gerät,
während mit 15 Keilwellenhalterungen bezeichnet sind, die an
der Tragkonstruktion 13 derart befestigt sind, daß sie die
Tragplatte 14 für das geschützte Gerät überragen; die
Bezugsziffer 16 bezeichnet Keilwellen, die zwischen der
Tragkonstruktion 13 und den Keilwellenhalterungen 15
angeordnet sind; mit der Bezugsziffer 17 sind Kugelführungen
für die Keilwellen bezeichnet, die in der Tragplatte 14
angeordnet sind und durch die die Keilwellen 16 geführt sind;
die Bezugsziffern 18 bezeichnen Schraubenfedern, die zwischen
der Tragkonstruktion 13 und der Tragplatte 14 angeordnet
sind, während mit der Bezugsziffer 19 Schwingungsdämpfer
zwischen der Tragkonstruktion 13 und der Tragplatte 14
bezeichnet sind; schließlich ist mit der Bezugsziffer 20 ein
Höhenlageregelgerät bezeichnet, das zwischen der
Tragkonstruktion 13 und der Tragplatte 14 angeordnet ist,
während die Bezugsziffer 21 den zu schützenden Apparat und
die Bezugsziffer 22 den Boden oder Flur kennzeichnet.

Die Keilwelle 16 kann durch die Kugelführungen 17 mit einem
sehr geringen Widerstand geführt werden, so daß bei einer
Schwingung der Tragkonstruktion 13 nach oben oder unten die
Kugelführungen 17 in gleicher Weise sich nach oben oder unten
in Bezug auf die Keilwelle 16 bewegen, wodurch ein Blockieren
oder andere Bewegungshemmungen sicher vermieden werden. Die
Keilwellen 16 und die Kugelführungen 17 bilden somit ein vertikales Gleitlager, wodurch eine genaue Positionierung der Tragplatte für das geschützte Gerät bewirkt wird.

Die Schraubenfedern 18 absorbieren vertikale Schwingungen und bilden zu gleicher Zeit die Tragvorrichtungen für das Gewicht des auf der Tragplatte 14 positionierten Gerätes.

Die Schwingungsdämpfer 19 absorbieren und dämpfen die Energie vertikaler Schwingungen und tragen gleichzeitig das Gewicht des Gerätes auf der Tragplatte 14, wobei sie insbesondere Schwingungen großer Amplituden absorbieren und dämpfen.

Der Höhenlageregler 20 ist so aufgebaut, daß er symmetrisch nach beiden Seiten als Reaktion auf vertikale Schwingungen ausweichen kann, wobei er so arbeitet, daß damit das Gleichgewicht des geschützten Gerätes gegen seine Tendenz zur Neigung, sobald sich die Lage seines Schwerpunktes ändert.

Nach Figur 8 ist mit der Bezugsziffer 13 die Tragkonstruktion bezeichnet, während die Bezugsziffer 14 die Tragplatte des zu schützendes Apparates kennzeichnet. Die Bezugsziffern 23 und 24 bezeichnen Befestigungsmittel an der Tragplatte 14 und die Bezugsziffern 25 und 26 entsprechende feststehende Drehachsen für den Höhenlageregler, die an der Tragkonstruktion 13 befestigt sind; mit den Bezugsziffern 27 und 28 sind Winkelhebel bezeichnet, die so montiert sind, daß sie sich um die starren Achsen 25 und 26 verdrehen könnnen. Mit den Bezugsziffern 29 und 30 sind stangenförmige Stege bezeichnet, die zwischen den einen Enden der Winkelhebel 27 und 28 und den Anlenkpunkten 23 und 24 in einer solchen Weise montiert sind, daß sie um die Anlenkpunkte 23 und 24 verschwenkt werden können. Schließlich bezeichnet die Bezugsziffer 31 eine Verbindungsstange, die die anderen Enden der Winkelhebel 27 und 28 miteinander verbindet und die Pfeile X, Y und Z zeigen die Drehrichtung der entsprechenden Einzelteile des Höhenlagereglers 20.

Wenn man nun annimmt, daß das linke Ende der Tragplatte 14 für das zu schützende Gerät sich relativ zu der Tragkonstruktion 14 nach unten bewegt, bewegt sich das
stangenförmige Teil 29, das am einen Ende an dem Drehpunkt 23
angelenkt ist in Richtung des Pfeiles X. Als Ergebnis der
Abwärtsbewegung des stangenförmigen Teils 29 dreht sich der
Winkelhebel 27 um seine Drehachse 25 entgegen dem
Uhrzeigersinn, wie das durch den Pfeil Y gezeigt ist. Dadurch
wird auch die Verbindungsstange 31 nach rechts bewegt,
wodurch der Winkelhebel 28, der an derem anderen Ende
befestigt ist, sich um die Drehachse 26 in Richtung des
Pfeiles Z dreht. Diese Drehbewegung des Winkelhebels 28
bewirkt eine Abwärtsbewegung des stangenförmigen Teils 30,
das an seinem anderen Ende befestigt ist, so daß das rechte
Ende der Tragplatte 14 ebenfalls nach unten bewegt wird,
wodurch die Tragplatte 14 wieder ihre ursprüngliche
horizontale Stellung einnimmt. Auf diese Weise stellt der
Höhenlagerregler 20 sicher, daß, wenn die Tragplatte 14 durch
eine vertikale Schwingung dazu neigt, sich auf einer Seite
abzusenken, die Platte 14 dann stets in ihre horizontale Lage
zurückgeführt wird. Dadurch ist sichergestellt, daß das zu
schützende Gerät 21 auf der Tragplatte 14 stets in einer
horizontalen Lage verbleibt, selbst wenn vertikale
Schwingungen auftreten.

Nachstehend ist die Wirkungsweise des Isolators für
horizontale und vertikale Schwingungen beschrieben.
Auftretende horizontale Schwingungen werden durch den
Schwingungsisolator 12 gedämpft und absorbiert, wie das
bereits beschrieben ist. Wenn nun angenommen wird, daß ein
Erdbeben auftritt, und als Folge davon die Tragkonstruktion
13 in vertikaler Richtung schwingt, ermöglichen die
Kugelführungen 17 ein vertikales Gleiten der Keilwellen 16
mit so geringer Reibung, daß kein Blockieren auftritt,
wodurch die Position der Tragplatte 14 für das zu schützende
Gerät stets genau eingehalten wird; denn die Schraubenfedern
18 und die Schwingungsdämpfer 19 absorbieren und dämpfen die
auftretenden vertikalen Schwingungen, während der
Höhenlagerregler 20 so arbeitet, daß die Tragplatte 14 für
das zu schützende Gerät stets in
horizontaler Lage gehalten wird.

Der Schwingungsisolator nach der vorliegenden Erfindung ist besonders geeignet für Präzisionsgeräte, wie z.B. Magnetplatteneinheiten, die dazu neigen, durch Schwingungen leicht Schaden zu nehmen, wodurch, selbst wenn Schwingungen während eines Erdbebens auftreten, die normale Funktionsweise des Gerätes beibehalten werden kann. Wenn auf diese Weise ein Computer mit derartigen Magnetscheibeneinheiten versehen ist, kann er sicher gegen Schwingungen geschützt werden, so daß, selbst wenn eine Katastrophe auftritt, die Funktionen der Kontroll-, Alarm-, und Informationsübertragung, die in den Computer eingegeben werden, sicher garantiert ist.

- 15 -

0240572

Patentansprüche

1. Schwingungsisolator, insbesondere für
erschütterungsempfindliche Geräte, dadurch
gekennzeichnet, daß der Schwingungsisolator aus
einer oder mehreren Isolator-Einheiten (12) besteht,
die jede einen zentralen Befestigungsbolzen (3),
sowie einen scheibenförmigen Schwingungsabsorber (5)
aus elastischem Material in Form von Gummi oder
ähnlichem aufweisen, durch dessen Zentrum sich der
Befestigungsbolzen (3) erstreckt, wobei der
Schwingungsabsorber (5) mit einer Vielzahl von
runden, ovalen, oder polygonalen Durchbrüchen (11)
versehen ist, die symmetrisch zum Zentrum und auf
angenähert konzentrischen Kreisen zu diesem
angeordnet sind, daß unter dem Schwingungsabsorber
(5) ein Gleitlager (8,9) für Bewegungen bei
Schwingungen in horizontalen Richtungen eingebaut
ist und daß Befestigungsmittel (6,7) zur Festlegung
des Schwingungsabsorbers (5) im Inneren eines
Aufnahmegehäuses (1) vorgesehen sind, wobei das
Aufnahmegehäuse (1) das untere Ende des
Befestigungsbolzens (3) und die anderen Teile umschließt.

2.  Schwingungsisolator nach Anspruch 1 dadurch
    gekennzeichnet,daß der scheibenförmige
    Schwingungsabsorber (5) aus Weichgummi hergestellt
    ist.

3.  Schwingungsisolator nach Anspruch 1 oder 2, dadurch
    gekennzeichnet, daß der scheibenförmige
    Schwingungsabsorber (5) in eine ringförmige Hülse
    (6) eingesetzt ist, die durch Befestigungsmittel (7)
    am Aufnahmegehäuse (1) festgelegt ist.

4.  Schwingungsisolator nach einem der Ansprüche 1-3,
    dadurch gekennzeichnet, daß das Gleitlager eine
    unter dem Schwingungsabsorber (5) befestigte Platte
    (9) zur Aufnahme von Lagerkugeln (8) sowie eine
    Vielzahl von Lagerkugeln (8) aufweist, die in
    konzentrischen Kreisen auf der Unterseite der
    Aufnahmeplatte (9) angeordnet sind.

5.  Schwingungsisolator, dadurch gekennzeichnet, daß er
    mehrere Isolatoreinheiten (12) für horizontale
    Schwingungen aufweist, wobei jede Einheit (12) einen
    Befestigungsbolzen (3), einen scheibenförmigen
    Schwingungsabsorber (5) aus elastischem Material in
    Form von Gummi oder ähnlichem enthält, durch dessen
    Zentrum sich der Befestigungsbolzen (3) erstreckt,
    wobei der Schwingungsabsorber (5) mit einer Vielzahl
    von runden, ovalen oder polygonalen Durchbrüchen
    versehen ist, die symmetrisch zum Zentrum und auf
    angenähert konzentrischen Kreisen zu diesem
    angeordnet sind, daß unterhalb des
    Schwingungsabsorbers eine Gleitlager für eine
    Bewegung bei Schwingungen in horizontalen Richtungen
    eingebaut ist, daß Befestigungsmittel (6,7) zur
    Festlegung des Schwingungsabsorbers (5) im Innern
    eines Aufnahmegehäuses (1) vorgesehen sind, wobei
    das Aufnahmegehäuse (1) das untere Ende des

0240572

Befestigungsbolzens (3) und andere Teile aufnimmt,
daß ferner eine Tragkonstruktion (13) auf den
Befestigungsbolzen (3) befestigt und eine Tragplatte
(14) für das zu schützende Gerät vorgesehen ist, daß
vertikale Gleitmittel (1b) mit einer Kugelführung
(17) zur Bewegung mit sehr geringem
Reibungswiderstand bei vertikalen Schwingungen
vorgesehen sind, um Bewegungsblockagen sicher zu
vermeiden, daß Widerlager zur Aufnahme von
Schraubenfedern (18) zur Absorption vertikaler
Schwingungen und zur Abstützung des Gewichtes des
auf der Tragplatte (14) angeordneten Gerätes (21)
sowie Schwingungsdämpfer (19) zur Dämpfung
vertikaler Schwingungen auf einen vorgegebenen Wert
angeordnet sind und daß schließlich ein
Höhenlageregler (20) intergriert ist, der sich
symmetrisch nach beiden Seiten bei vertikalen
Schwingungen bewegen kann, wobei die vertikalen
Gleitlager (16,17) die Widerlager und die
Schwingungsabsorber (18,19) sowie der
Höhenlageregler (20) zwischen der Tragkonstruktion
(13) und der Tragplatte (14) für das zu schützende
Gerät (21) angeordnet sind.

# FIG.1

# FIG . 2(a)

# FIG . 2(b)

FIG. 3

FIG.4(a)

FIG.4(b)    FIG.4(c)

FIG.5(a)

FIG.5(b)  FIG.5(c)

6

6  6

# FIG .6(a)

# FIG .6(b)

# FIG .6(c)

0240572

# FIG.7(a)

0240572

## FIG.7(b)

FIG.8(a)

13    14    23    24    29    30    25    26    27    28    20    31

FIG.8(b)

13    14    23    25    24    26    29    30    27    28    31    20    X    Y    Z

## INTERNATIONAL SEARCH REPORT

International Application No. PCT/JP86/00481

**I. CLASSIFICATION OF SUBJECT MATTER** (If several classification symbols apply, indicate all) [3]

According to International Patent Classification (IPC) or to both National Classification and IPC

Int.Cl$^4$ F16F15/02, F16F15/08

**II. FIELDS SEARCHED**

Minimum Documentation Searched [4]

| Classification System | Classification Symbols |
|---|---|
| IPC | F16F15/02, F16F15/08 |

Documentation Searched other than Minimum Documentation
to the Extent that such Documents are Included in the Fields Searched [5]

| | |
|---|---|
| Jitsuyo Shinan Koho | 1929 – 1986 |
| Kokai Jitsuyo Shinan Koho | 1971 – 1986 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| X | JP, A, 46-6167 (Brown Boveri & Cie A.G.) 07 December 1971 (07. 12. 71) P.2, upper left column, line 15 to lower left column, line 16, Fig. 1 & US, A, 3730463 | 1-4 |
| Y | JP, A, 57-140939 (Sotoyama Yoshie) 31 August 1982 (31. 08. 82) Fig. 4 & US, A, 4496130 & NO, A, 823471 & FI, A, 823613 | 1-4 |
| P | JP, A, 60-184742 (Shoden Kabushiki Kaisha) 20 September 1985 (20. 09. 85) P.236, lower right column, line 12 to p.237, upper right column, line 5, Figs. 2, 3 (Family: none) | 1-4 |
| Y | JP, A, 59-47543 (Mitsubishi Steel Mfg. Co., Ltd.) 17 March 1984 (17. 03. 84) P.259, upper left column, line 13 to p.260, upper right column, line 11, Figs. 3 to 6 (Family: none) | 5 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| November 26, 1986 (26.11.86) | December 8, 1986 (08.12.86) |
| International Searching Authority [1] | Signature of Authorized Officer [20] |
| Japanese Patent Office | |

Form PCT/ISA/210 (second sheet) (October 1981)